# EUROPEAN PATENT APPLICATION

(11) **EP 4 404 528 A1**
(43) Date of publication of application: **24.07.2024**
(21) Application number: 24152851.2
(22) Date of filing: 19.01.2024
(51) Int. Cl.: H04L 43/08, H04L 43/10, H04L 43/50, H04L 43/0829, H04L 43/0894, H04L 47/11

(54) **METHODS AND SYSTEMS FOR DELIVERING TELEMETRY DATA**

(30) Priority: 20.01.2023 US 202318157330
(71) Applicant: Comcast Cable Communications LLC, Philadelphia, Pennsylvania 19103 (US)
(72) Inventor: DEEN, Robert, Universal City, 91608-1002 (US); EHLINGER, James, Universal City, 91608-1002 (US)
(74) Representative: V.O.

(57) **Abstract**

Methods, apparatuses, and systems are described for determining one or more characteristics of a network using multiplexed network transport protocols. A device may inject data into the network and send information indicative of the data injected into the network. A network device may receive the information indicative of the data injected into the network, monitor the network to identify the data injected into the network, and determine one or more characteristics of the network.

## Description

### BACKGROUND

Delivering streamed video over the Internet requires the ability to acquire accurate data associated with network delivery capabilities during the streaming of video and other data. This often involves the use of a third party observer to monitor network data packets. However, the increased pervasive incorporation of packet encryption and changes to Internet transport protocol packet designs have continuously removed most observable data from the transport protocol packets. For example, the new IETF QUIC protocol provides the use of only a single bit assigned for end-to-end delivery testing and observation with all other transport header data encrypted. This creates new challenges for determining range and quality telemetry data for data streams at the network level due to the increased focus on encrypting network data flows.

### SUMMARY

It is to be understood that both the following general description and the following detailed description are exemplary and explanatory only and are not restrictive. Methods, systems, and apparatuses for improved content streaming are described.

A device (e.g., a network device, a user device, etc.) connected to a network may initiate an Internet connection with other devices over one or more networks. The device may inject data into a network and send attribute data of the injected data to a second device. The network may be monitored by a second device for an effect caused by the injected data. The second device may compare the attributes of the injected data and the effect caused by the injected data to identify the injected data and thereby determine one or more characteristics of the network.

This summary is not intended to identify critical or essential features of the disclosure, but merely to summarize certain features and variations thereof. Other details and features will be described in the sections that follow.

### BRIEF DESCRIPTION OF THE DRAWINGS

The accompanying drawings, which are incorporated in and constitute a part of the present description serve to explain the principles of the apparatuses and systems described herein:
Figure 1 shows an example system for injecting data into a network;
Figure 2 shows an example network;
Figures 3A-3C show example data that may be injected into the network;
Figure 4 shows an example pulse signal;
Figures 5A-5C show an example effect of the injected data on the network;
Figure 6 shows an example data flow scenario of the data packets;
Figure 7 shows a flowchart of an example method;
Figure 8 shows a flowchart of another example method;
Figure 9 shows a flowchart of another example method;
Figure 10 shows a flowchart of another example method;
Figure 11 shows a flowchart of another example method; and
Figure 12 shows a block diagram of an example system and computing device.

### DETAILED DESCRIPTION

As used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another configuration includes from the one particular value and/or to the other particular value. When values are expressed as approximations, by use of the antecedent "about," it will be understood that the particular value forms another configuration. It will be further understood that the endpoints of each of the ranges are significant both in relation to the other endpoint, and independently of the other endpoint.

"Optional" or "optionally" means that the subsequently described event or circumstance may or may not occur, and that the description includes cases where said event or circumstance occurs and cases where it does not.

Throughout the description and claims of this specification, the word "comprise" and variations of the word, such as "comprising" and "comprises," means "including but not limited to," and is not intended to exclude other components, integers or steps. "Exemplary" means "an example of" and is not intended to convey an indication of a preferred or ideal configuration. "Such as" is not used in a restrictive sense, but for explanatory purposes.

It is understood that when combinations, subsets, interactions, groups, etc. of components are described that, while specific reference of each various individual and collective combinations and permutations of these may not be explicitly described, each is specifically contemplated and described herein. This applies to all parts of this application including, but not limited to, steps in described methods. Thus, if there are a variety of additional steps that may be performed it is understood that each of these additional steps may be performed with any specific configuration or combination of configurations of the described methods.

As will be appreciated by one skilled in the art, the methods and systems may take the form of an entirely hardware embodiment, an entirely software embodiment, or an embodiment combining software and hardware aspects. Furthermore, the methods and systems may take the form of a computer program product on a computer-readable storage medium having computer-readable program instructions (e.g., computer software) embodied in the storage medium. More particularly, the present methods and systems may take the form of web-implemented computer software. Any suitable computer-readable storage medium may be utilized including hard disks, CD-ROMs, optical storage devices, magnetic storage devices, memresistors, Non-Volatile Random Access Memory (NVRAM), flash memory, or a combination thereof.

Throughout this application reference is made to block diagrams and flowcharts. It will be understood that each block of the block diagrams and flowcharts, and combinations of blocks in the block diagrams and flowcharts, respectively, may be implemented by processor-executable instructions. These processor-executable instructions may be loaded onto a general purpose computer, special purpose computer, or other programmable data processing apparatus to produce a machine, such that the processor-executable instructions which execute on the computer or other programmable data processing apparatus create a device for implementing the functions specified in the flowchart block or blocks.

These processor-executable instructions may also be stored in a computer-readable memory that may direct a computer or other programmable data processing apparatus to function in a particular manner, such that the processor-executable instructions stored in the computer-readable memory produce an article of manufacture including processor-executable instructions for implementing the function specified in the flowchart block or blocks. The processor-executable instructions may also be loaded onto a computer or other programmable data processing apparatus to cause a series of operational steps to be performed on the computer or other programmable apparatus to produce a computer-implemented process such that the processor-executable instructions that execute on the computer or other programmable apparatus provide steps for implementing the functions specified in the flowchart block or blocks.

Accordingly, blocks of the block diagrams and flowcharts support combinations of devices for performing the specified functions, combinations of steps for performing the specified functions and program instruction means for performing the specified functions. It will also be understood that each block of the block diagrams and flowcharts, and combinations of blocks in the block diagrams and flowcharts, may be implemented by special purpose hardware-based computer systems that perform the specified functions or steps, or combinations of special purpose hardware and computer instructions.

This detailed description may refer to a given entity performing some action. It should be understood that this language may in some cases mean that a system (e.g., a computer) owned and/or controlled by the given entity is actually performing the action.

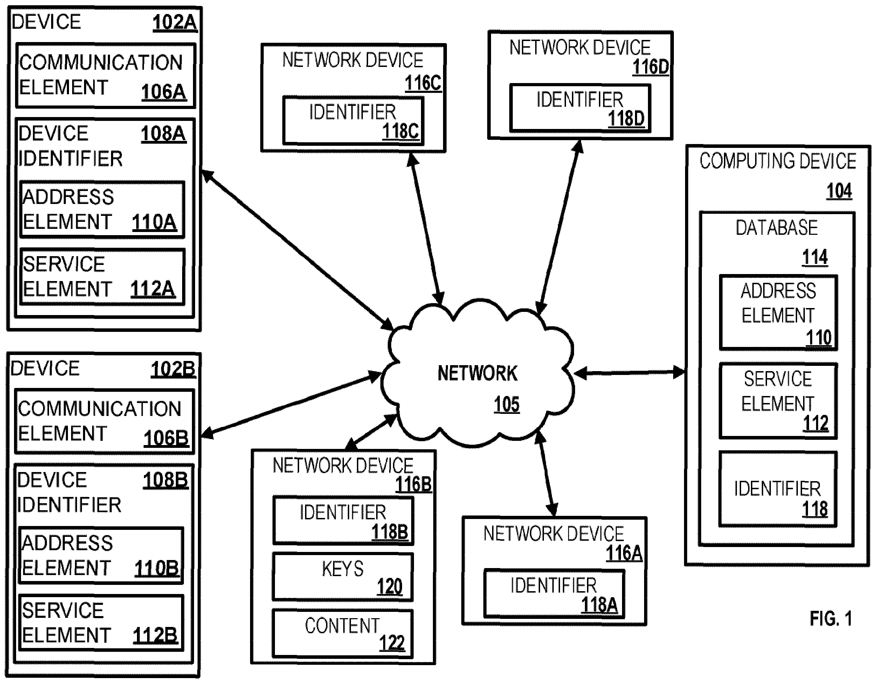

**FIG. 1** shows an example system **100** for injecting data (e.g., one or more pulse signals) into a network. For example, the system **100** may be configured to inject data into a network **105** and send information indicative of the injected data to a device (e.g., devices **102A-102B,** network devices **116A-116D,** computing device **104,** etc.) connected to the network **105.** The system **100** may be configured to provide services, such as network-related services, to a device. The network and system may comprise a plurality of devices **102A-102B** in communication with a plurality of network devices **116A-116D** and/or a computing device **104,** such as a server, for example, via network **105.** The computing device **104** may be disposed locally or remotely relative to the devices **102A-102B** and the network devices **116A-116D.** As an example, the devices **102A-102B,** network devices **116A-116D,** and the computing device **104** can be in communication via a private and/or public network **105** such as the Internet or a local area network (LAN). Other forms of communications can be used such as wired and wireless telecommunication channels, for example.

The devices **102A-102B** may comprise one or more user devices. The user devices may comprise electronic devices such as computers, smartphones, laptops, tablets, set top boxes, display devices, or other devices capable of communicating with the network devices **116A-116D** and/or the computing device **104.** The user devices may further comprise devices such as media devices, VoIP devices, routers, printers, WiFi speakers, security cameras, or smart assistant devices (e.g. Alexa, Nest, Ring, etc.). As an example, the devices **102A-102B** may comprise communication elements **106A-106B** for providing an interface to a user to interact with the devices **102A-102B** and/or the computing device **104.** The communication elements **106A-106B** can be any interface for presenting and/or receiving information to/from the user, such as user feedback. An example interface may be a communication interface such as a web browser (e.g., Internet Explorer^{®}, Mozilla Firefox^{®}, Google Chrome^{®}, Safari°, or the like). Other software, hardware, and/or interfaces can be used to provide communication between the user and one or more of the devices **102A-102B** and the network devices **116A-116D** and/or the computing device **104.** As an example, the communication elements **106A-106B** may request or query various files from a local source and/or a remote source. As an example, the communication elements **106A-106B** may transmit data to a local or remote device such as the network devices **116A-116D** and/or the computing device **104.**

The devices **102A-102B** may be associated with user identifiers or device identifiers **108A-108.** As an example, the device identifiers **108A-108B** may be any identifier, token, character, string, or the like, for differentiating one user or user device (e.g., devices **102A-102B)** from another user or user device. As an example, the device identifiers **108A-108B** may identify a user or user device as belonging to a particular class of users or user devices. As an example, the device identifiers **108A-108B** may comprise information relating to the devices **102A-102B** such as a manufacturer, a model or type of device, a service provider associated with the devices **102A-102B,** a state of the devices **102A-102B,** a locator, and/or a label or classifier. Other information can be represented by the device identifiers **108A-108B.**

The device identifiers **108A-108B** may comprise address element **110A-110B** and service element **112A-112B.** The address elements **110A-110B** may comprise or provide an Internet protocol address, a network address, a media access control (MAC) address, international mobile equipment identity (IMEI) number, international portable equipment identity (IPEI) number, an Internet address, or the like. As an example, the address elements **110A-110B** may be relied upon to establish a communication session between the devices **102A-102B** and the network devices **116A-116D** and/or the computing device **104** or other devices and/or networks. As an example, the address elements **110A-110B** can be used as an identifier or locator of the devices **102A-102B.** In an aspect, the address elements **110A-110B** can be persistent for a particular network.

The service elements **112A-112B** may comprise an identification of the service providers associated with the devices **102A-102B,** with the class of devices **102A-102B,** and/or with a particular network **105** with which the devices **102A-102B** are currently accessing services associated with the service providers. The class of the devices **102A-102B** may be related to a type of device, capability of device, type of service being provided, and/or a level of service (e.g., business class, service tier, service package, etc.). As an example, the service elements **112A-112B** may comprise information relating to or provided by a communication service provider (e.g., Internet service provider) that is providing or enabling data flow such as communication services to the devices **102A-102B.** As an example, the service elements **112A-112B** may comprise information relating to a preferred service provider for one or more particular services relating to the devices **102A-102B.** In an aspect, the address elements **110A-110B** can be used to identify or retrieve data from the service elements **112A-112B,** or vice versa. As an example, one or more of the address elements **110A-110B** and the service elements **112A-112B** may be stored remotely from the devices **102A-102B** and retrieved by one or more devices such as the devices **102A-102B** and the computing device **104.** Other information may be represented by the service elements **112A-112B.**

The computing device **104** may comprise a server for communicating with the devices **102A-102B** and/or the network devices **116A-116D** via network **105.** As an example, the computing device **104** may communicate with the devices **102A-102B** for providing data and/or services. As an example, the computing device **104** may provide services, such as network (e.g., Internet) connectivity, network printing, media management (e.g., media server), content services, streaming services, broadband services, or other network-related services. The computing device **104** may allow the devices **102A-102B** to interact with remote resources, such as data, devices, and files. As an example, the computing device **104** may be configured as (or disposed at) a central location (e.g., a headend, or processing facility), which may receive content (e.g., data, input programming) from multiple sources. The computing device **104** may combine the content from the multiple sources and may distribute the content to user (e.g., subscriber) locations via a distribution system.

The computing device **104** may be configured to manage the communication between the devices **102A-102B** and a database **114** for sending and receiving data therebetween. As an example, the database **114** may store a plurality of files (e.g., web pages), user identifiers or records, or other information. As an example, the devices **102A-102B** may request and/or retrieve a file from the database **114.** The database **114** may store information relating to the devices **102A-102B** such as the address element **110** and/or the service element **112.** As an example, the computing device **104** may obtain the device identifiers **108A-108B** from the devices **102A-102B** and retrieve information from the database **114** such as the address elements **110A-110B** and/or the service elements **112A-112B.** As an example, the computing device **104** may obtain the address elements **110A-110B** from the devices **102A-102B** and may retrieve the service elements **112A-112B** from the database **114,** or vice versa. Any information may be stored in and retrieved from the database **114.** The database **114** may be disposed remotely from the computing device **104** and accessed via direct or indirect connection. The database **114** may be integrated with the computing device **104** or some other device or system.

One or more of the network devices **116A-116D** may be configured to facilitate the connection of a device, such as the user device **102A-102B,** to the network **105.** As a further example, the network devices **116A-116D** may be configured as wireless access points (WAPs). The network devices **116A-116D** may be configured to allow one or more wireless devices to connect to a wired and/or wireless network using Wi-Fi, Bluetooth ^{®}, Zigbee ^{®}, or any desired method or standard.

The network devices **116A-116D** may comprise identifiers **118A-118D.** As an example, one or more identifiers can be or relate to an Internet Protocol (IP) Address IPV4/IPV6 or a media access control address (MAC address) or the like. As an example, the identifiers **118A-118D** may be unique identifiers for facilitating communications on the physical network segment. Each of the network devices **116A-116D** may comprise an identifier **118** that is distinct. As an example, the identifiers **118A-118D** may be associated with a physical location of the network devices **116A-116D.**

One or more devices (e.g., devices **102A-102B,** network devices **116A-116D,** the computing devices **104,** etc.) may be configured to establish a network connection with at least one other device (e.g., devices **102A-102B,** network devices **116A-116D,** the computing devices **104,** etc.) via network **105.** The network connection may comprise an Internet connection comprising a plurality of independent data streams. For example, each independent data stream may comprise a plurality of data packets, wherein each data packet may be individually encrypted. The plurality of independent data streams may comprise one or more of data injected into the network, one or more media streams, one or more video streams, one or more audio streams, one or more data streams, or any combination thereof. The network connection may comprise an encrypted connection such as a Quick UDP Internet Connection (QUIC) connection, wherein each data packet of the plurality data packets may be individually encrypted. However, the use of such encryption methods as QUIC increases the difficulty for third party monitoring of the data packets. For example, the QUIC protocol provides the use of only a single bit assigned for end-to-end delivery testing and observation, wherein all other transport header data is encrypted.

Thus, the devices connected to the network **105** may be configured to inject data (e.g., a pulse signal) into the network **105** and send information indicative of the injected data to a monitoring device to enable the monitoring device to determine one or more characteristics of the network. For example, the data injected into the network may be used in order to track one or more data packets of the plurality of individually encrypted data packets as the one or more data packets are transmitted throughout the network **105.** The monitoring device may determine one or more characteristics of the network by correlating the information indicative of the injected data with an effect caused to the network by the injected data. For example, unencrypted data injected into the network may result in one or more of the plurality of individually encrypted data packets to increase in a data size. The monitoring device may identify a pattern of the plurality of individually encrypted data packets based on the information indicative of the injected data. For example, the monitoring device may determine that the data size of one or more of the plurality of individually encrypted data packets appear in the network according to a particular signal pattern (e.g., pulse signal according to one or more attributes) and correlates with the information indicative of the injected data. Thus, the monitoring device may identify the data injected into the network based on the correlation of the information indicative of the injected data with the effect caused to the network by the injected data. Based on the identification of the data injected into the network, the monitoring device may determine the one or more characteristics of the network. The one or more characteristics of the network may comprise one or more of a network backlog, network congestion, or data packet loss. In an example, the injected data may comprise null data packets that may be injected into the network as a pulse signal comprising one or more attributes. The one or more attributes may comprise one or more of a predetermined data size, a predetermined data frequency, a predetermined data pattern, a random data pattern, or a predetermined data injection interval. In an example, the monitoring device may analyze the network based on identifying the injected data to determine one or more characteristics of the network over a period of time. The monitoring device may determine one or more characteristics of the network during one or more time segments and correlate the one or more characteristics during each time segment of the one or more time segments to determine how the network behaves and varies over time. The one or more time segments may comprise one or more of one or more contiguous time segments, one or more continuous time segments, or one or more discrete time segments. As an example, the devices **102A-102B,** the network devices **116A-116D,** the computing devices **104,** or any combination thereof, may be configured to inject the data into the network and send the information indicative of the injected data to the monitoring device. As an example, the devices **102A-102B,** the network devices **116A-116D,** the computing devices **104,** or any combination thereof, may be configured to act as a monitoring device and receive the information indicative of the injected data to determine the one or more characteristics of the network.

As an example, the one or more characteristics of the network may be used to determine that one of the independent data streams of the network has reached a point in the network that is subject to network congestion or is experiencing data packet loss between two points of the network. For example, a network connection may be established between device **102A** and device **102B,** wherein at least one independent data stream of the plurality of independent data streams may be routed via network device **116A.** Device **102B** may determine, based on identifying data injected into the network by device **102A,** that network device **116A** is experiencing congestion. In response, device **102B** may communicate the network issue to device **102A,** wherein device **102A** may cause the at least one independent data stream to re-route via network device **116B** to device **102B.** Device **102A,** for example, may further inject data into the data stream directed towards device **102B** for device **102B** to determine/confirm that there are no issues (e.g., network backlog, network congestion, or data packet loss) with routing the at least one independent data stream via network device **116B.**

As an example, two devices (e.g., devices **102A-102B,** network devices **116A-116D,** computing device **104,** etc.) may communicate bi-directionally between each other via the network (e.g., QUIC connection, Internet connection). For example, device **102A** may inject data into the network to communicate one or more characteristics associated with the network to device **102B.** Device **102B** may provide a communication, in response to the injected data, by injecting data of its own into the network directed towards device **102A.**

As an example, a device (e.g., devices **102A-102B,** network devices **116A-116D,** computing device **104,** etc.) monitoring the network may identify the data injected into the network to determine one or more characteristics of at least one independent data stream of the plurality of independent data streams of the network. For example, the monitoring device may "subtract" the signature of the injected data from the collected telemetry of a network connection (e.g., the total amount of data of the network connection) to determine the one or more characteristics of the at least one independent data stream. The one or more characteristics of the at least one independent data stream may comprise one or more of a bit rate of the at least one independent data stream or a bandwidth requirement of the at least one independent data stream.

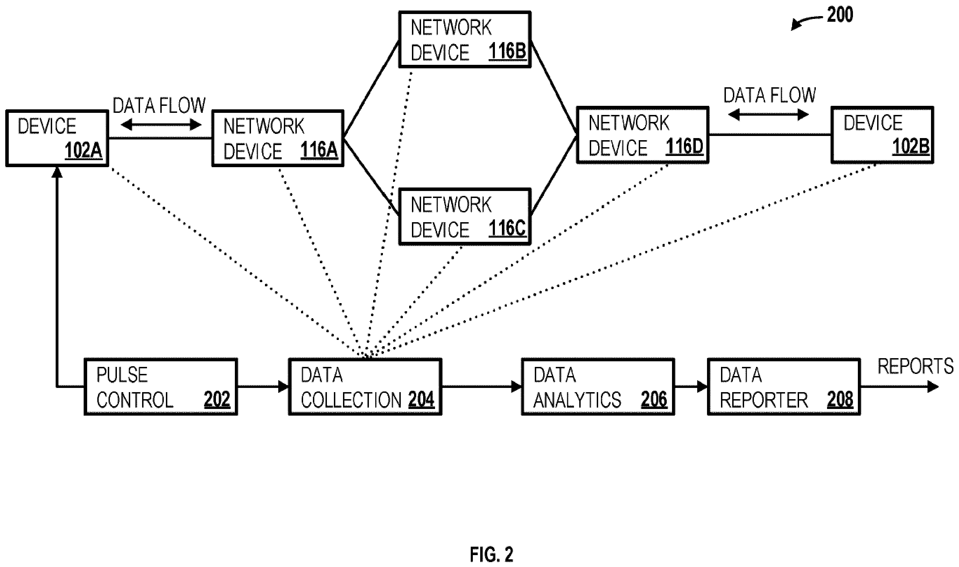

**FIG. 2** shows an example network **200** for the data flow of the data packets in the network **200** between the two devices. For example, device **102A** may establish a network connection with device **102B.** The network connection may comprise a plurality of independent data streams. Each independent data stream of the plurality of independent data streams may comprise a plurality of data packets. The plurality of independent data streams may comprise one or more of data injected into the network, one or more media streams, one or more video streams, one or more audio streams, one or more data streams, or any combination thereof. The network connection may comprise an encrypted connection, such as a QUIC connection, wherein each data packet of the plurality of data packets may be individually encrypted, and thus, increasing the difficulty for third party monitoring of the data packets. As an example, as shown in **FIG. 2****,** device **102A** may establish a network connection wherein at least some of the data packets of at least one of the independent data streams may be routed via network device **116A,** network device **116B,** and network device **116D** before reaching device **102B.** Furthermore, at least some of the data packets of at least one other independent data stream may be routed via network device **116A,** network device **116C,** and network device **116D** before reaching device **102B.** Devices **102A** and **102B** may be configured to communicate one or more characteristics of the network connection to each other by injecting data (e.g., pulse signal) into the network connection and sending information indicative of the injected data to each other to enable the other device to determine the one or more characteristics of the network connection.

In an example, a pulse control device **202** may be configured to cause at least one of the devices **102A-102B** to inject data into the network connection. The pulse control device **202** may be configured to create and manage data events that will create the data to be injected into the network connection. The pulse control device **202** may be configured to define a new pulse event and pulse data wave form, set the pulse event data size, set the pulse event data content, create a new pulse event queue, create the pulse event instance, add the pulse event instance to the signal queue scheduled for a time X, process the pulse event queue, stop the pulse event queue, and get the pulse event history report. A data collection device **204** may be configured to receive information indicative of the injected data from the pulse control device **202** so that the data collection device **204** may identify the injected data (e.g., pulse signal). The data collection device **204** may be configured as one or more monitoring devices at different collection points in the network, such as the dotted lines shown in **FIG. 2****,** for example. The data collection device **204** may be configured to send the injected data characteristics (e.g., time, data events, etc.) to a data analytics device **206** to permit the data analytics device **206** to identify the injected data and remove the injected data's signature from the collected telemetry of the network connection to permit analysis of the network data without the injected data. For example, by removing the injected data's signature, the data analytics device **206** may determine a bit rate of one or more of the data streams of the network connection. A data reporter **208** may then report the one or more characteristics of the network connection determined by the data analytics device **206** to device **102A** and/or device **102B.** The use of a pulse control device **202,** a data collection device **204,** a data analytics device **206,** and a data reporter device **208** as separate devices is merely one example of injecting data into the network connection to determine one or more characteristics of the network connection. The devices may be combined into a single device, or the processes performed by each device may be performed by each of the devices **102A-102B** and the network devices **116A-116D** individually, or a combination thereof.

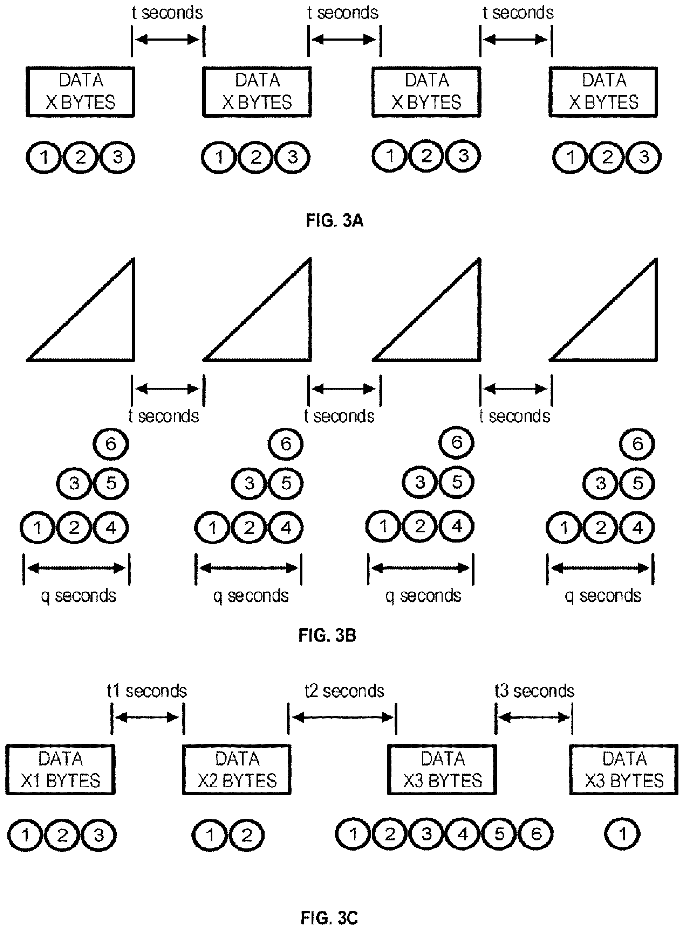

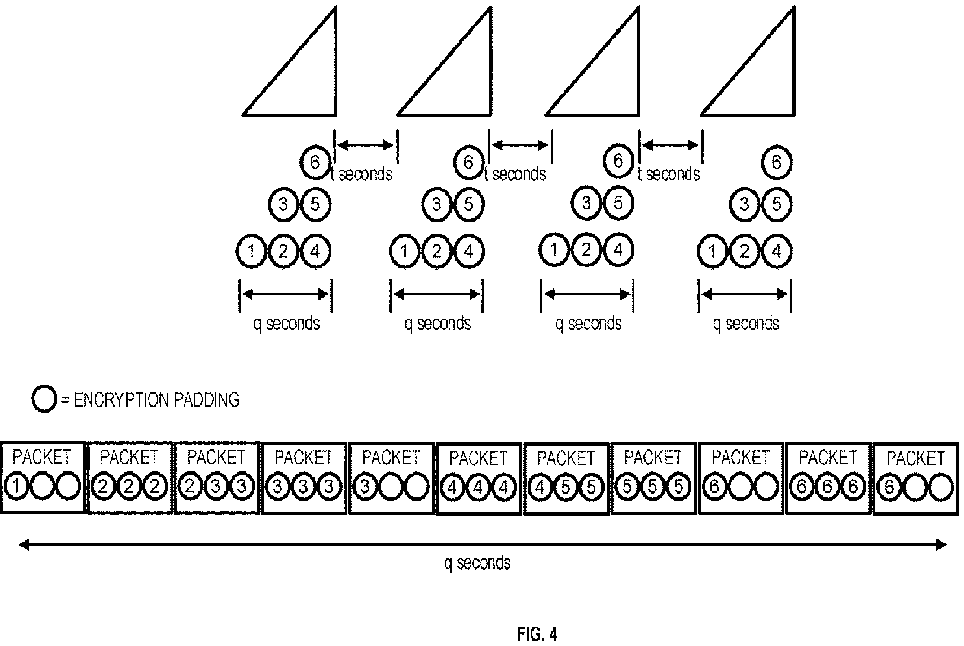

FIGS. 3A-C and **FIG. 4** show example data that may be injected into the network connection. The injected data may comprise null data packets that may be injected into the network as a pulse signal comprising one or more attributes. The one or more attributes may comprise one or more of a predetermined data size, a predetermined data frequency, predetermined data pattern, a random data pattern, or a predetermined data injection interval. For example, **FIG. 3A** shows a signal containing fixed data amounts X bytes sent at fixed time t intervals. As an example, **FIG. 3B** shows a saw tooth signal, wherein data may start at one byte and increase at y bytes per second fraction for q seconds repeated every t seconds. As an example, **FIG. 3C** shows a signal containing random bytes at random intervals. The actual random data amounts and delays may be reported out to the telemetry system (e.g., devices **102A-102B,** network devices **116A-116D,** computing device **104,** etc.) so that they may be identified in the collected telemetry data. This also permits them to be processed out of the collected raw telemetry of the network connection. **FIG. 4** shows an example of a saw tooth signal as it may be encrypted in a QUIC network connection. The use of such encryption methods as QUIC increases the difficulty for third party monitoring of the data packets. Because the actual network packets are padded and encrypted to make observation difficult, pulses having varying data amounts over time increase the likelihood to detect the pulse signal, and thus, allowing third party monitoring of individually encrypted data packets. The use of data based on a repeatable pattern increases the chances of detection by a device monitoring the QUIC network connection. For example, over time the monitoring may recognize a QUIC connection has been injected with data by recognizing the pattern of the injected data. For example, the monitoring device may receive information indicative of the injected data and identify an effect cause by the injected data to the QUIC network connection. The monitoring device may identify a data waveform or pattern of the QUIC network connection that may be correlated with the information indicative of the data that was injected into the QUIC network connection. Based on correlating the waveform or pattern of the QUIC network connection with the information indicative of the injected data, the monitoring device may identify the injected data.

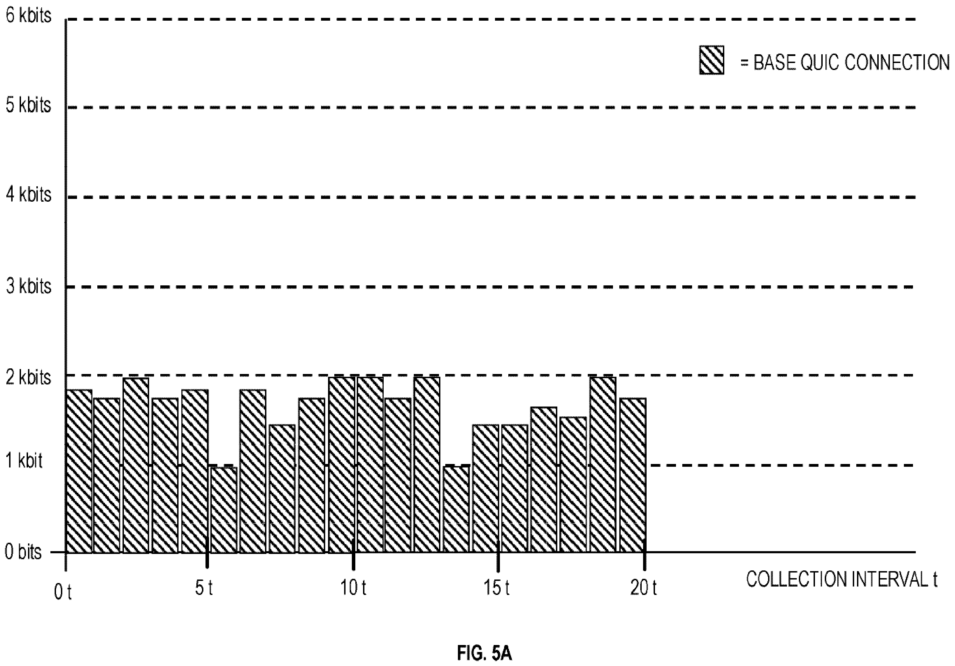

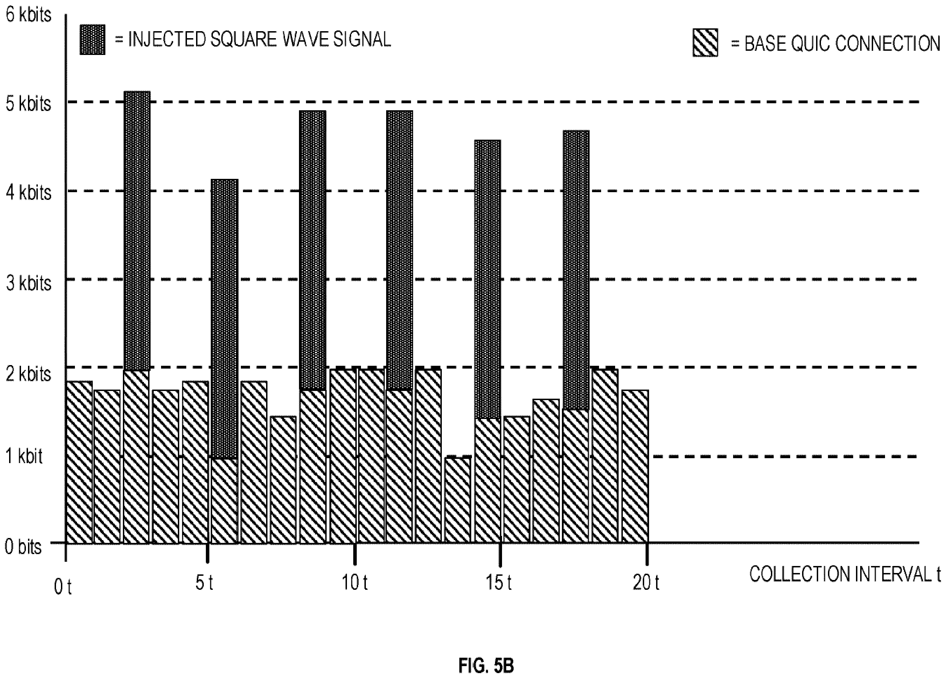

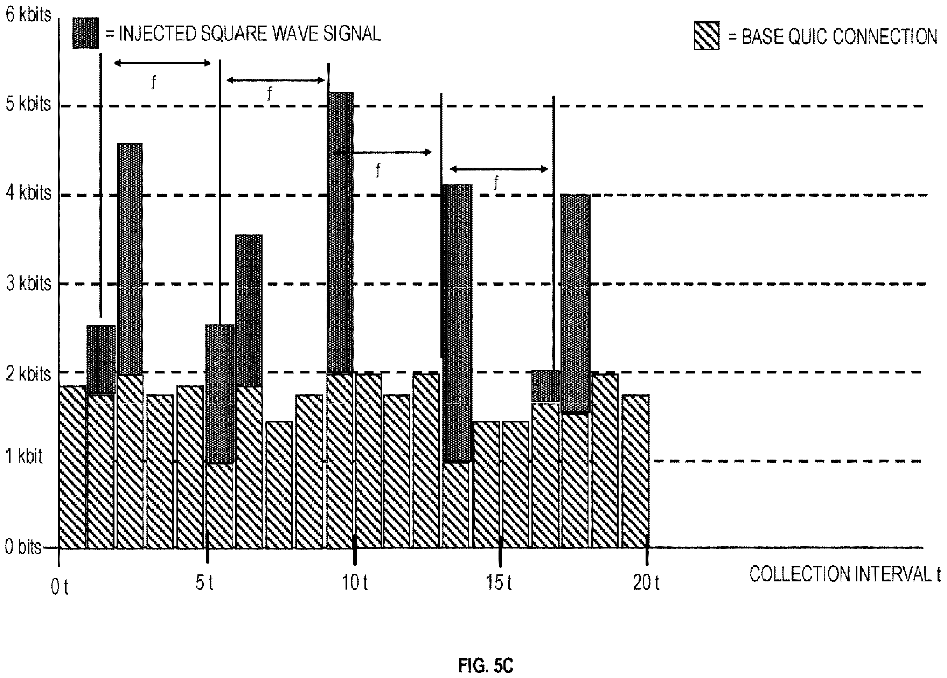

**FIGS 5A-5C** show an example of how the injected data may affect the network connection at several data collection points. **FIG. 5A****,** shows an example network connection that is monitored according to collection interval t. For example, a monitoring device may observe the network connection at multiple intervals, wherein the network connection never exceeds 2 kbits at each monitoring interval. As shown in **FIG. 5B****,** data may be injected into the network connection. The injected data may comprise a square wave signal comprising 3.1 kbits at a frequency of 3t. As shown in **FIG. 5C****,** a monitoring device may identify the injected data based on observing the irregularities in the network connection. Over time, the monitoring device may recognize the injected data based on the waveform or pattern of the injected data. For example, the square wave may be injected at a frequency f, wherein f/t comprises a non-whole number. Since frequency f may not be an even multiple of t, the injected signal may span multiple collection intervals. Thus, the injected signal/data, over time, may be distinctly recognizable by a device monitoring the network connection. The monitoring device may be configured to receive information indicative of the injected data. For example, the monitoring device may receive information indicating that the injected data comprises a square wave signal comprising 3.1 kbits at the frequency f. The monitoring device may determine, over time, an effect caused to the network connection based on the information indicative of the injected data. For example, the monitoring device may detect the pattern of the data peaks of the network connection at each data collection time t and determine that the network connection includes injected data. The monitoring device may correlate the effect caused to the network connection by the injected data with the information indicative of the injected data to identify the injected data. In an example, after identifying the injected data, the monitoring device may remove the injected data's signature from the collected telemetry of the network connection to analyze the network data without the injected data. For example, by removing the injected data's signature, the monitoring device may determine a bit rate of one or more of the data streams of the network connection.

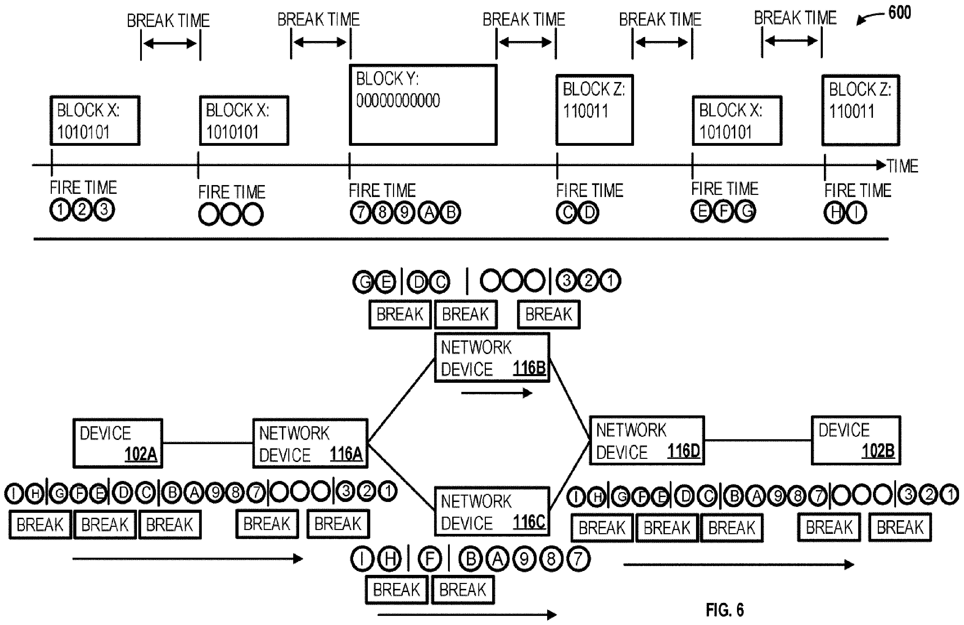

**FIG. 6** shows an example data flow scenario **600** of the data packets in a network connection. In **FIG. 6****,** device **102A** may establish a network connection with device **102B.** The network connection may comprise a plurality of independent data streams, wherein each independent data stream of the plurality of independent data streams may comprise a plurality of data packets. The network connection may comprise an encrypted connection, such as a QUIC connection, wherein each data packet of the plurality of data packets may be individually encrypted. The encryption of each data packet increases the difficulty for third party monitoring of the data packets. For example, **FIG. 6** shows that data packets 1, 2, and 3 associated with Block X are sent at a first time, encryption data packets associated with Block X are sent at a second time, data packets 7, 8, 9, A, and B associated with Block Y are sent at a third time, data packets C and D associated with Block Z are sent at a fourth time, data packets E, F, and G associated with Block X are sent at a fifth time, and data packets H and I associated with Block Z are sent at a sixth time. Device **102A** may establish a network connection wherein at least some of the data packets may be routed via network device **116A,** network device **116B,** and network device **116D,** while at least some of the data packets may be routed via network device **116A,** network device **116C,** and network device **116D.** For example, in **FIG. 5****,** data packets G, E, D, C, 3, 2, and 1 and the encryption padding data packets are routed via network device **116B,** while data packets I, H, F, B, A, 9, 8, and 7 are routed via network device **116C.**

As an example, if network device **116B** is experiencing any issues causing loss of data packets or network backlog/congestion, due to the use of an encrypted QUIC connection, device **102B** would have difficulty detecting these issues. Device **102A** may inject data into the network connection and send information indicative of the injected data to device **102B,** wherein device **102B** may identify the injected data, based on the information indicative of the injected data, to determine that network device **116B** is the point in the network connection experiencing issues causing data packet loss or network backlog/congestion. As a result, device **102B** may communicate this issue to device **102A,** wherein device **102A** may cause the data packets to be re-routed via network device **116C** to device **102B.** In an example, a monitoring device may monitor the data routed via network device **116B,** identify the injected data, based on the information indicative of the injected data, and determine the issues associated with network device **116B** and report the issues to device **102A.**

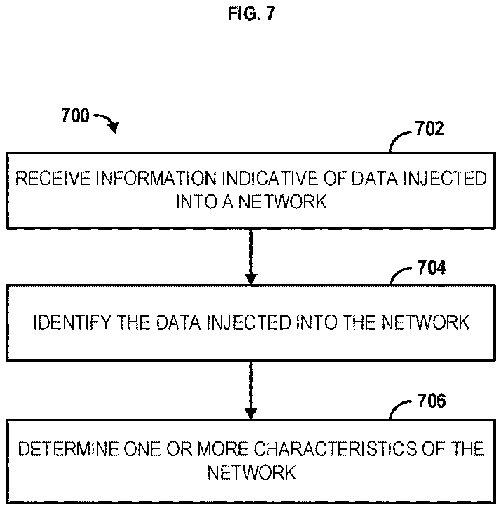

**FIG. 7** shows an example method **700** for determining one or more characteristics of a network based on data injected into the network. Method **700** may be implemented by devices **102A-102B,** network devices **116A-116D,** computing device **104,** or any combination thereof. At step **702,** information indicative of data injected into a network may be received. The injected data may comprise a pulse signal having one or more attributes. The one or more attributes may comprise one or more of a predetermined data size, a predetermined data frequency, a predetermined data pattern, a random data pattern, a predetermined data injection interval, or any combination thereof. The information indicative of the injected data may comprise the one or more attributes of the injected data. The network may comprise a plurality of data streams associated with a plurality of individually encrypted data packets. The plurality of data streams may comprise one or more of the injected data, one or more media streams, one or more video streams, one or more audio streams, or one or more data streams.

At step **704,** the injected data may be identified based on a correlation of the information indicative of the injected data with an effect caused to the network by the injected data. For example, the initial data injected into the network may comprise unencrypted data. The unencrypted data injected into the network may result in one or more of the plurality of individually encrypted data packets to increase in a data size. In an example, a device monitoring the network may identify a pattern of the plurality of individually encrypted data packets based on the information indicative of the injected data. The monitoring device may determine that a data size of one or more of the plurality of individually encrypted data packets appear in the network according to a particular signal pattern (e.g., the pulse signal according to the one or more attributes) and correlates with the information indicative of the injected data. Thus, the monitoring device may identify the data injected into the network based on the correlation of the information indicative of the injected data with the effect caused to the network by the injected data.

At step **706,** one or more characteristics of the network may be determined based on the identification of the data injected into the network. The one or more characteristics of the network may comprise one or more of a network backlog, network congestion, or data packet loss. As an example, the one or more characteristics may be used to determine that one of the data streams of the network is being routed via a device that is experiencing network congestion. A monitoring device may identify this issue and notify the device sending data through the network so that the device may cause the independent data stream to re-route via a second device. As an example, a monitoring device may analyze the network based on identifying the injected data to determine one or more characteristics of the network over a period of time. The monitoring device may determine one or more characteristics of the network during one or more time segments and correlate the one or more characteristics during each time segment of the one or more time segments to determine how the network behaves and varies over time. The one or more time segments may comprise one or more of one or more contiguous time segments, one or more continuous time segments, or one or more discrete time segments.

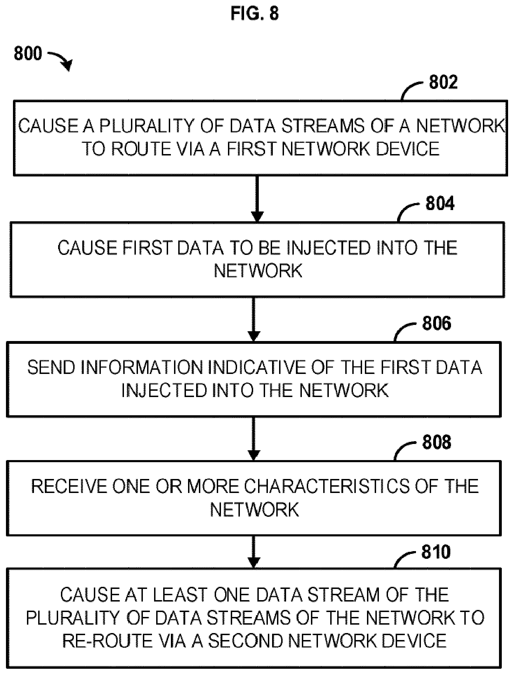

**FIG. 8** shows an example method **800** for determining one or more characteristics of a network based on data injected into the network. Method **800** may be implemented by devices **102A-102B,** network devices **116A-116D,** computing device **104,** or any combination thereof. At step **802,** a plurality of data streams may be caused to route via a first network device. The plurality of data streams may comprise one or more of first data injected into the network, one or more media streams, one or more video streams, one or more audio streams, or one or more data streams. The network may comprise the plurality of data streams, wherein the plurality of data streams may be associated with a plurality of individually encrypted data packets.

At step **804,** first data may be injected into the network. The injected first data may comprise a pulse signal having one or more attributes. The one or more attributes may comprise one or more of a predetermined data size, a predetermined data frequency, a predetermined data pattern, a random data pattern, a predetermined data injection interval, or any combination thereof. For example, the injected first data may comprise unencrypted data. The unencrypted data injected into the network may result in one or more of the plurality of individually encrypted data packets to increase in a data size. In an example, the pattern of the increased data sizes of the one or more individually encrypted data packets may be correlated with information indicative of the injected first data in order to identify the injected first data.

At step **806,** information indicative of the injected first data may be sent into the network. The information indicative of the injected first data may be used to identify the first data injected into the network. For example, the information indicative of the injected first data may comprise the one or more attributes of the injected first data. For example, the injection of the first data into the network may cause an effect to the network that may be identified by a device monitoring the network by correlating the effect with the information indicative of the first data. For example, the monitoring device may identify a pattern of the plurality of individually encrypted data packets based on the information indicative of the injected first data. The monitoring device may determine that a data size of one or more of the plurality of individually encrypted data packets appear in the network according to a particular signal pattern (e.g., the pulse signal according to the one or more attributes) and correlates with the information indicative of the injected first data. Thus, the monitoring device may identify the first data injected into the network based on the correlation of the information indicative of the injected first data with the effect caused to the network by the injected first data.

At step **808,** one or more characteristics of the network may be received. For example, a monitoring device may be configured to receive the information indicative of the injected first data. The monitoring device may be configured to monitor the network and correlate an effect caused to the network based on the injected first data with the information indicative of the injected first data. For example, the unencrypted data injected into the network may result in one or more of the plurality of individually encrypted data packets to increase in a data size. The monitoring device may determine that a data size of one or more of the plurality of individually encrypted data packets appear in the network according to a particular signal pattern (e.g., the pulse signal according to the one or more attributes) and correlates with the information indicative of the injected first data. The monitoring device may identify the first data injected into the network based on the correlation of the information indicative of the injected first data with the effect caused to the network by the injected first data. Based on the identification of the injected first data, the monitoring device may determine one or more characteristics of the network and send the characteristic data to a device that sent the plurality of data streams. The one or more characteristics may comprise one or more of a network backlog, network congestion, or data packet loss.

At step **810,** based on the one or more characteristics at least one of the data streams of the plurality of data steams may be caused to re-route via a second network device. For example, a device that sent the plurality of data streams may determine from the one or more characteristics that the first network device may be experiencing network congestion. The device may then cause the at least one independent data stream to be re-routed via the second network device.

In an example, second data may be injected into the network in order to determine if there any issues with re-routing the at least one data stream via the second network device. For example, after the at least one data stream is re-routed via the second network device, a device that established the network may inject the second data based on the re-routing of the at least one data stream to confirm whether or not the new route, via the second network device, is experiencing any network congestion or data packet loss. The injected second data may comprise a pulse signal having one or more attributes. The one or more attributes may comprise one or more of a predetermined data size, a predetermined data frequency, a predetermined data pattern, a random data pattern, a predetermined data injection interval, or any combination thereof. For example, the injected second data may comprise unencrypted data. The unencrypted data injected into the network may result in one or more of the plurality of individually encrypted data packets to increase in a data size. In an example, the pattern of the increased data sizes of the one or more individually encrypted data packets may be correlated with information indicative of the injected second data in order to identify the injected second data.

The information indicative of the injected second data may be sent. For example, the information indicative of the injected second data may comprise the one or more attributes of the injected second data. For example, the injection of the second data into the network may cause an effect to the network that may be identified by a device monitoring the network by correlating the effect with the information indicative of the second data. For example, the monitoring device may identify a pattern of the plurality of individually encrypted data packets based on the information indicative of the injected second data. The monitoring device may determine that a data size of one or more of the plurality of individually encrypted data packets appear in the network according to a particular signal pattern (e.g., the pulse signal according to the one or more attributes) and correlates with the information indicative of the injected second data. Thus, the monitoring device may identify the second data injected into the network based on the correlation of the information indicative of the injected second data with the effect caused to the network by the injected first data.

One or more characteristics of the network associated with the at least one data stream being re-routed via the second network device may be received. For example, a monitoring device may receive the information indicative of the injected second data. The monitor device may correlate an effect caused to the network based on the injected second data with the information indicative of the injected second data. For example, the unencrypted data injected into the network may result in one or more of the plurality of individually encrypted data packets to increase in a data size. The monitoring device may determine that a data size of one or more of the plurality of individually encrypted data packets appear in the network according to a particular signal pattern (e.g., the pulse signal according to the one or more attributes) and correlates with the information indicative of the injected second data. The monitoring device may identify the second data injected into the network based on the correlation of the information indicative of the injected second data with the effect caused to the network by the injected second data. Based on the identifying the injected second data, the monitoring device may determine one or more characteristics of the network and send the characteristic data to a device that sent the plurality of data streams. As an example, the one or more characteristics may indicate, or confirm, whether or not the new route, via the second network device, is experiencing any network congestion or data packet loss.

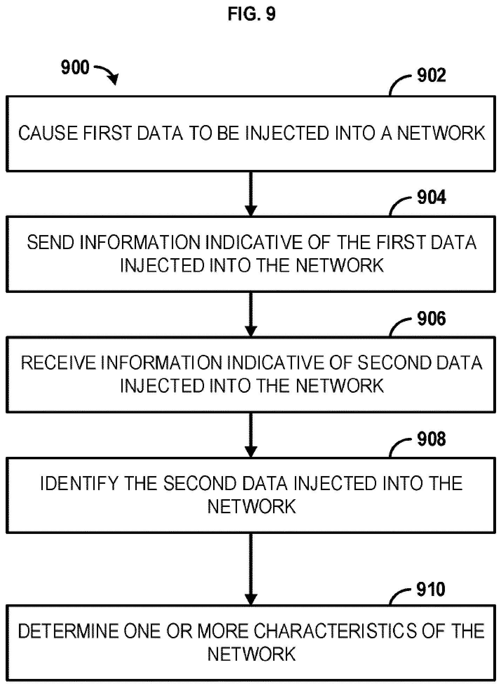

**FIG. 9** shows an example method **900** for determining one or more characteristics of a network based on data injected into the network. Method **900** may be implemented by devices **102A-102B,** network devices **116A-116D,** computing device **104,** or any combination thereof. At step **902,** first data may be injected into a network. The network may comprise a plurality of data streams, wherein the plurality of data streams may be associated with a plurality of individually encrypted data packets. The injected first data may comprise a pulse signal having one or more attributes. The one or more attributes may comprise one or more of a predetermined data size, a predetermined data frequency, a predetermined data pattern, a random data pattern, a predetermined data injection interval, or any combination thereof. For example, the injected first data may comprise unencrypted data. The unencrypted data injected into the network may result in one or more of the plurality of individually encrypted data packets to increase in a data size. In an example, the pattern of the increased data sizes of the one or more individually encrypted data packets may be correlated with information indicative of the injected first data in order to identify the injected first data.

At step **904,** information indicative of the injected first data may be sent. The information indicative of the injected first data may be used to identify the first data injected into the network. For example, the information indicative of the injected first data may comprise the one or more attributes of the injected first data. For example, the injection of the first data into the network may cause an effect to the network that may be identified by a device monitoring the network by correlating the effect with the information indicative of the first data. For example, the monitoring device may identify a pattern of the plurality of individually encrypted data packets based on the information indicative of the injected first data. The monitoring device may determine that a data size of one or more of the plurality of individually encrypted data packets appear in the network according to a particular signal pattern (e.g., the pulse signal according to the one or more attributes) and correlates with the information indicative of the injected first data. Thus, the monitoring device may identify the first data injected into the network based on the correlation of the information indicative of the injected first data with the effect caused to the network by the injected first data.

At step **906,** information indicative of second data injected into the network may be received. The information indicative of the injected second data may comprise one or more attributes (e.g., data size, data frequency, data pattern, and/or data injection interval) of the injected second data. In an example, a monitoring device may be configured to receive the information indicative of the injected first data. The monitoring device may be configured to monitor the network and correlate an effect caused to the network based on the injected first data with the information indicative of the injected first data. For example, the unencrypted data injected into the network may result in one or more of the plurality of individually encrypted data packets to increase in a data size. The monitoring device may determine that a data size of one or more of the plurality of individually encrypted data packets appear in the network according to a particular signal pattern (e.g., the pulse signal according to the one or more attributes) and correlates with the information indicative of the injected first data. The monitoring device may identify the first data injected into the network based on the correlation of the information indicative of the injected first data with the effect caused to the network by the injected first data. Based on the identification of the injected first data, the monitoring device may determine one or more characteristics of the network. Based on the one or more characteristics, the monitoring device may inject second data into the network and send information indicative of second data injected into the network to a device that may have injected the first data into the network. For example, two devices may bi-directionally communicate with each other via the network in order to communicate one or more characteristics of the network, such as, for example, network backlog, network congestion, or data packet loss.

At step **908,** the injected second data may be identified based on a correlation of the information indicative of the injected second data and an effect caused to the network by the injected second data. For example, the initial data injected into the network may comprise unencrypted data. The unencrypted data injected into the network may result in one or more of the plurality of individually encrypted data packets to increase in a data size. In an example, a device monitoring the network may identify a pattern of the plurality of individually encrypted data packets based on the information indicative of the injected data. The monitoring device may determine that a data size of one or more of the plurality of individually encrypted data packets appear in the network according to a particular signal pattern (e.g., the pulse signal according to the one or more attributes) and correlates with the information indicative of the injected second data. Thus, the monitoring device may identify the second data injected into the network based on the correlation of the information indicative of the injected second data with the effect caused to the network by the injected second data.

At step **910,** one or more characteristics of the network may be determined based on the identification of the second data injected into the network. The one or more characteristics of the network may comprise one or more of a network backlog, network congestion, or data packet loss. In an example, the one or more characteristics may be used to determine that one of the data streams of the plurality of data streams is being routed via a device that is experiencing network congestion. A monitoring device may identify this issue and notify the device sending data through the network so that the device may cause the data stream to re-route via a second device.

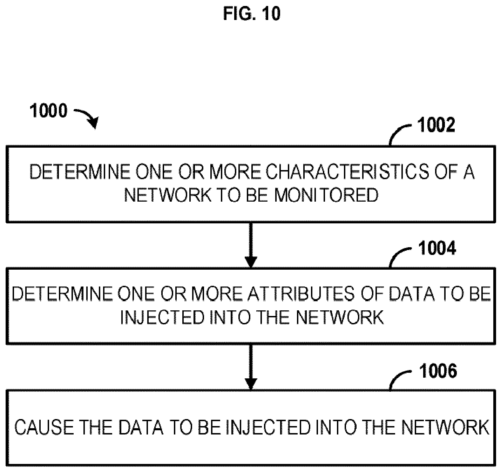

**FIG. 10** shows an example method **1000** for defining the data to be injected into a network based on one or more characteristics of the network to be monitored. Method **1000** may be implemented by devices **102A-102B,** network devices **116A-116D,** computing device **104,** or any combination thereof. At step **1002,** one or more characteristics of a network to be monitored may be determined. The one or more characteristics of the network to be monitored may comprise one or more of a network backlog, network congestion, or data packet loss. The network may comprise a plurality of data streams associated with a plurality of individually encrypted data packets. The plurality of data streams may comprise one or more of injected data, one or more media streams, one or more video streams, one or more audio streams, or one or more data streams.

A step **1004,** one or more attributes of data to be injected into injected into the network may be determined based on the one or more characteristics of the network to be monitored. The one or more attributes may comprise one or more of a predetermined data size, a predetermined data frequency, or a predetermined data injection interval. As an example, the data to be injected into the network may be defined based on the one or more characteristics of the network to be monitored. The injected data may be defined in a manner to improve the accuracy of determining the one or more characteristics to be monitored. For example, the injected data may be defined as a square wave (e.g., pulse signal) injected at a specified frequency. The network may be monitored at an interval every t times associated with the frequency. The frequency may not comprise an even multiple of t, and thus, the injected data may span multiple collection intervals. The result is that the injected data, over time, may be distinctly recognizable by a device monitoring the network.

At step **1006,** the data may be injected into the network. The data injected into the network may be defined according to the one or more attributes. For example, the data may comprise a pulse signal. In an example, information indicative of the injected data may be sent. The information indicative of the injected data may comprise the one or more attributes of the injected data. The information indicative of the injected data may be used by a monitoring device to identify the data injected into the network. For example, the injection of the data into the network may cause an effect to the network that may be identified by a device monitoring the network by correlating the effect with the information indicative of the data. For example, the monitoring device may identify a pattern of the plurality of individually encrypted data packets based on the information indicative of the injected data. The monitoring device may determine that a data size of one or more of the plurality of individually encrypted data packets appear in the network according to a particular signal pattern (e.g., the pulse signal according to the one or more attributes) and correlates with the information indicative of the injected first data. Thus, the monitoring device may identify the data injected into the network based on the correlation of the information indicative of the injected data with the effect caused to the network by the injected data.

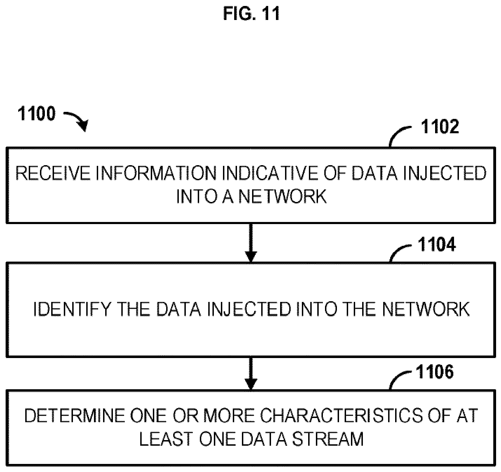

**FIG. 11** shows an example method **1100** for determining one or more characteristics of a network based on data injected into the network. Method **1100** may be implemented by devices **102A-102B,** network devices **116A-116D,** computing device **104,** or any combination thereof. At step **1102,** information indicative of data injected into the network may be received. The injected data may comprise a pulse signal having one or more attributes. The one or more attributes may comprise one or more of a predetermined data size, a predetermined data frequency, a predetermined data pattern, a random data pattern, a predetermined data injection interval, or any combination thereof. The information indicative of the injected data may comprise the one or more attributes of the injected data. The network may comprise a plurality of data streams associated with a plurality of individually encrypted data packets. The plurality of data streams may comprise one or more of the injected data, one or more media streams, one or more video streams, one or more audio streams, or one or more data streams.

At step **1104,** the injected data may be identified based on a correlation of the information indicative of the injected data with an effect caused to the network by the injected data. For example, the initial data injected into the network may comprise unencrypted data. The unencrypted data injected into the network may result in one or more of the plurality of individually encrypted data packets to increase in a data size. In an example, a device monitoring the network may identify a pattern of the plurality of individually encrypted data packets based on the information indicative of the injected data. The monitoring device may determine that a data size of one or more of the plurality of individually encrypted data packets appear in the network according to a particular signal pattern (e.g., the pulse signal according to the one or more attributes) and correlates with the information indicative of the injected data. Thus, the monitoring device may identify the data injected into the network based on the correlation of the information indicative of the injected data with the effect caused to the network by the injected data.

At step **1106,** one or more characteristics of at least one data stream of the plurality of data streams may be determined based on the identification of the data injected into the network. The one or more characteristics of the at least one data stream may comprise one or more of a bit rate of the at least one data stream, or a bandwidth requirement of the at least one data stream. In an example, a monitoring device may compare the injected data to the data of the network. For example, the monitoring device may "subtract" the signature of the injected data from the collected telemetry of the network (e.g., the total amount of data of the network, or network connection) to determine the one or more characteristics of the at least one data stream.

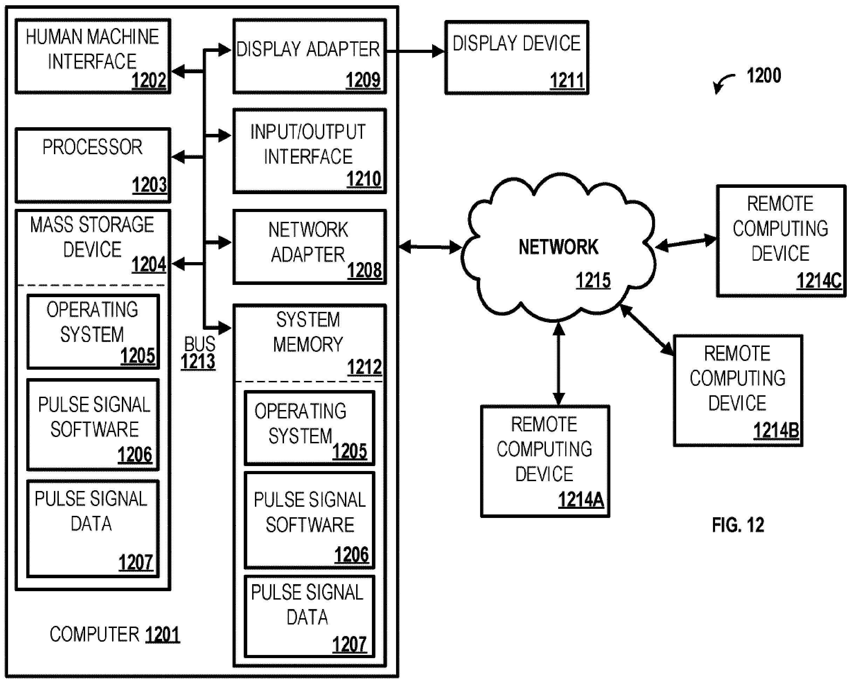

The methods and systems may be implemented on a computer **1201** as illustrated in **FIG. 12** and described below. By way of example, computing device **104,** devices **102A-102B,** and/or one or more of the network devices **116A-116D** of **FIG. 1** may be a computer **1201** as illustrated in **FIG. 12****.** Similarly, the methods and systems disclosed can utilize one or more computers to perform one or more functions in one or more locations. **FIG. 12** is a block diagram illustrating an example operating environment **1200** for performing the disclosed methods. This operating environment **1200** is only an example of an operating environment and is not intended to suggest any limitation as to the scope of use or functionality of operating environment architecture. Neither should the operating environment **1200** be interpreted as having any dependency or requirement relating to any one or combination of components illustrated in the operating environment **1200.**

The present methods and systems can be operational with numerous other general purpose or special purpose computing system environments or configurations. Examples of well-known computing systems, environments, and/or configurations that can be suitable for use with the systems and methods comprise, but are not limited to, personal computers, server computers, laptop devices, and multiprocessor systems. Additional examples comprise set top boxes, programmable consumer electronics, network PCs, minicomputers, mainframe computers, distributed computing environments that comprise any of the above systems or devices, and the like.

The processing of the disclosed methods and systems can be performed by software components. The disclosed systems and methods can be described in the general context of computer-executable instructions, such as program modules, being executed by one or more computers or other devices. Generally, program modules comprise computer code, routines, programs, objects, components, data structures, and/or the like that perform particular tasks or implement particular abstract data types. The disclosed methods can also be practiced in grid-based and distributed computing environments where tasks are performed by remote processing devices that are linked through a communications network. In a distributed computing environment, program modules can be located in local and/or remote computer storage media such as memory storage devices.

Further, one skilled in the art will appreciate that the systems and methods disclosed herein can be implemented via a general-purpose computing device in the form of a computer **1201.** The computer **1201** can comprise one or more components, such as one or more processors **1203,** a system memory **1212,** and a bus **1213** that couples various components of the computer **1201** comprising the one or more processors **1203** to the system memory **1212.** The system can utilize parallel computing.

The bus **1213** can comprise one or more of several possible types of bus structures, such as a memory bus, memory controller, a peripheral bus, an accelerated graphics port, or local bus using any of a variety of bus architectures. By way of example, such architectures can comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, and a Peripheral Component Interconnects (PCI), a PCI-Express bus, a Personal Computer Memory Card Industry Association (PCMCIA), Universal Serial Bus (USB) and the like. The bus **1213,** and all buses specified in this description can also be implemented over a wired or wireless network connection and one or more of the components of the computer **1201,** such as the one or more processors **1203,** a mass storage device **1204,** an operating system **1205,** pulse signal software **1206,** pulse signal data **1207,** a network adapter **1208,** the system memory **1212,** an Input/Output Interface **1210,** a display adapter **1209,** a display device **1211,** and a human machine interface **1202,** can be contained within one or more remote computing devices **1214A-1214C** at physically separate locations, connected through buses of this form, in effect implementing a fully distributed system.

The computer **1201** typically comprises a variety of computer readable media. For example, computer readable media may be any available media that is accessible by the computer **1201** and comprises, for example and not meant to be limiting, both volatile and non-volatile media, removable and non-removable media. The system memory **1212** can comprise computer readable media in the form of volatile memory, such as random access memory (RAM), and/or non-volatile memory, such as read only memory (ROM). The system memory **1212** typically can comprise data such as the pulse signal data **1207** and/or program modules such as the operating system **1205** and the pulse signal software **1206** that are accessible to and/or are operated on by the one or more processors **1203.**

The computer **1201** may also comprise other removable/non-removable, volatile/non-volatile computer storage media. The mass storage device **1204** can provide non-volatile storage of computer code, computer readable instructions, data structures, program modules, and other data for the computer **1201.** For example, the mass storage device **1204** can be a hard disk, a removable magnetic disk, a removable optical disk, magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like.

Optionally, any number of program modules can be stored on the mass storage device **1204,** such as, by way of example, the operating system **1205** and the pulse signal software **1206.** One or more of the operating system **1205** and the pulse signal software **1206** (or some combination thereof) can comprise elements of the programming and the pulse signal software **1206.** The pulse signal data **1207** can also be stored on the mass storage device **1204.** The pulse signal data **1207** can be stored in any of one or more databases known in the art. Examples of such databases comprise, DB2^{®}, Microsoft^{®} Access, Microsoft^{®} SQL Server, Oracle^{®}, mySQL, PostgreSQL, and the like. The databases can be centralized or distributed across multiple locations within the network **1215.**

The user may enter commands and information into the computer **1201** via an input device (not shown). Examples of such input devices comprise, but are not limited to, a keyboard, pointing device (e.g., a computer mouse, remote control), a microphone, a joystick, a scanner, tactile input devices such as gloves, and other body coverings, motion sensor, and the like These and other input devices can be connected to the one or more processors **1203** via the human machine interface **1202** that is coupled to the bus **1213,** but can be connected by other interface and bus structures, such as a parallel port, game port, an IEEE 1394 Port (also known as a Firewire port), a serial port, a network adapter **1208,** and/or a universal serial bus (USB).

In yet another aspect, the display device **1211** can also be connected to the bus **1213** via an interface, such as the display adapter **1209.** It is contemplated that the computer **1201** can have more than one display adapter **1209** and the computer **1201** can have more than one display device **1211.** For example, the display device **1211** can be a monitor, an LCD (Liquid Crystal Display), light emitting diode (LED) display, television, smart lens, smart glass, and/ or a projector. In addition to the display device **1211,** other output peripheral devices can comprise components such as speakers (not shown) and a printer (not shown) which can be connected to the computer **1201** via an Input/Output Interface **1210.** Any step and/or result of the methods can be output in any form to an output device. Such output can be any form of visual representation, comprising, but not limited to, textual, graphical, animation, audio, tactile, and the like. The display device **1211** and the computer **1201** can be part of one device, or separate devices.

The computer **1201** can operate in a networked environment using logical connections to one or more remote computing devices **1214A-1214C.** By way of example, a remote computing device **1214A-1214C** can be a personal computer, computing station (e.g., workstation), portable computer (e.g., laptop, mobile phone, tablet device), smart device (e.g., smartphone, smart watch, activity tracker, smart apparel, smart accessory), security and/or monitoring device, a server, a router, a network computer, a peer device, edge device or other common network node, and so on. Logical connections between the computer **1201** and a remote computing device **1214A-1214C** can be made via a network **1215,** such as a local area network (LAN) and/or a general wide area network (WAN). Such network connections can be through the network adapter **1208.** The network adapter **1208** can be implemented in both wired and wireless environments. Such networking environments are conventional and commonplace in dwellings, offices, enterprise-wide computer networks, intranets, and the Internet.

For purposes of illustration, application programs and other executable program components such as the operating system **1205** are illustrated herein as discrete blocks, although it is recognized that such programs and components can reside at various times in different storage components of the computing device **1201,** and are executed by the one or more processors **1203** of the computer **1201.** An implementation of the pulse signal software **1206** can be stored on or transmitted across some form of computer readable media. Any of the disclosed methods can be performed by computer readable instructions embodied on computer readable media. Computer readable media can be any available media that can be accessed by a computer. By way of example and not meant to be limiting, computer readable media can comprise "computer storage media" and "communications media." "Computer storage media" can comprise volatile and non-volatile, removable and non-removable media implemented in any methods or technology for storage of information such as computer readable instructions, data structures, program modules, or other data. In an example, computer storage media may comprise RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

The methods and systems can employ artificial intelligence (AI) techniques such as machine learning and iterative learning. Examples of such techniques comprise, but are not limited to, expert systems, case based reasoning, Bayesian networks, behavior based AI, neural networks, fuzzy systems, evolutionary computation (e.g. genetic algorithms), swarm intelligence (e.g. ant algorithms), and hybrid intelligent systems (e.g. Expert inference rules generated through a neural network or production rules from statistical learning).

While the methods and systems have been described in connection with preferred embodiments and specific examples, it is not intended that the scope be limited to the particular embodiments set forth, as the embodiments herein are intended in all respects to be illustrative rather than restrictive.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, such as: matters of logic with respect to arrangement of steps or operational flow; plain meaning derived from grammatical organization or punctuation; the number or type of embodiments described in the specification.

Here follows a list of clauses highlighting various aspects of the disclosure.
Clause 1: A method comprising:
   receiving, by a network device, information indicative of data injected into a network, wherein the network comprises a plurality of data streams associated with a plurality of individually encrypted data packets;
   identifying, based on a correlation of the information indicative of the data injected into the network with an effect caused to the network, the data injected into the network, wherein the effect is caused to the network by the data injected into the network; and
   determining, based on the identification of the data injected into the network, one or more characteristics of the network.
Clause 2: The method of any preceding clause, wherein the information indicative of the data injected into the network comprises one or more attributes of the injected data.
Clause 3: The method of any preceding clause, wherein the injected data is a pulse signal comprising one or more attributes comprising one or more of a predetermined data size, a predetermined data frequency, a predetermined data pattern, a random data pattern, or a predetermined data injection interval.
Clause 4: The method of any preceding clause, wherein the plurality of data streams comprises one or more of: the injected data, one or more media streams, one or more video streams, one or more audio streams, or one or more data streams.
Clause 5: The method of any preceding clause, wherein the effect caused to the network comprises an increase in a data size of one or more data packets of the plurality of individually encrypted data packets.
Clause 6: The method of any preceding clause, wherein the one or more characteristics comprise one or more of a network backlog, network congestion, or data packet loss.
Clause 7: The method of any preceding clause, further comprising determining the one or more characteristics of the network during one or more time segments.
Clause 8: A method, performed alone or in combination with any preceding clause, the method comprising:
   causing, by a computing device, a plurality of data streams of a network to route via a first network device, wherein the plurality of data streams are associated with a plurality of individually encrypted data packets;
   causing first data to be injected into the network;
   sending information indicative of the first data injected into the network;
   receiving one or more characteristics of the network, wherein the one or more characteristics of the network are determined based on a correlation of the information indicative of the first data injected into the network with an effect caused to the network by the injected first data; and
   causing, based on the one or more characteristics, at least one data stream of the plurality of data streams of the network to re-route via a second network device.
Clause 9: The method of any preceding clause, e.g. clause 8, wherein the plurality of data streams comprise one or more of: the injected first data, one or more media streams, one or more video streams, one or more audio streams, or one or more data streams.
Clause 10: The method of any preceding clause, e.g. clause 8, wherein the injected first data is a pulse signal comprising one or more attributes comprising one or more of a predetermined data size, a predetermined data frequency, a predetermined data pattern, a random data pattern, or a predetermined data injection interval.
Clause 11: The method of any preceding clause, e.g. clause 8, wherein the information indicative of the first data injected into the network comprises one or more attributes of the injected first data.
Clause 12: The method of any preceding clause, e.g. clause 8, wherein the one or more characteristics comprise one or more of a network backlog, network congestion, or data packet loss.
Clause 13: The method of any preceding clause, e.g. clause 8, wherein the effect caused to the network comprises an increase in a data size of one or more data packets of the plurality of individually encrypted data packets.
Clause 14: The method of any preceding clause, e.g. clause 8, further comprising:
   causing, based on the at least one data stream re-routing via the second network device, second data to be injected into the network;
   sending information indicative of the second data injected into the network; and
   receiving one or more characteristics of the network associated with the at least one data stream re-routing via the second network device.
Clause 15: The method of any preceding clause, e.g. clause 14, further comprising wherein the one or more characteristics associated with the at least one data stream re-routing via the second network device are determined based on a correlation of the information indicative of the second data injected into the network with an effect caused to the network by the injected second data.
Clause 16: A method, performed alone or in combination with any preceding clause, the method comprising:
   causing, by a first device, first data to be injected into a network, wherein the network comprises a plurality of data streams associated with a plurality of individually encrypted data packets;
   sending information indicative of the first data injected into the network;
   receiving, from a second device, information indicative of second data injected into the network, wherein the second device sends the information indicative of the second data injected into the network based on a correlation of the information indicative of the first data injected into the network with an effect caused to the network by the injected first data;
   identifying, based on a correlation of the information indicative of the second data injected into the network with an effect caused to the network by the injected second data, the second data injected into the network; and
   determining, based on the identification of the second data injected into the network, one or more characteristics of the network.
Clause 17: The method of any preceding clause, e.g. clause 16, wherein at least one of the injected first data or the injected second data is a pulse signal comprising one or more attributes comprising one or more of a predetermined data size, a predetermined data frequency, a predetermined data pattern, a random data pattern, or a predetermined data injection interval.
Clause 18: The method of any preceding clause, e.g. clause 16, wherein the plurality of data streams comprises one or more of: the injected first data, the injected second data, one or more media streams, one or more video streams, one or more audio streams, or one or more data streams.
Clause 19: The method of any preceding clause, e.g. clause 16, wherein the information indicative of the first data injected into the network comprises one or more attributes of the injected first data.
Clause 20: The method of any preceding clause, e.g. clause 16, wherein at least one of the effect caused to the network by the injected first data or the effect caused to the network by the injected second data comprises an increase in a data size of one or more data packets of the plurality of individually encrypted data packets.
Clause 21: A method for determining one or more characteristics of a network using multiplexed network transport protocols.
Clause 22: A device, e.g. for use in the method according to any preceding clause, wherein the device is configured to inject data into the network and/or send information indicative of the data injected into the network.
Clause 22: A device, e.g. network device for use in the method according to any preceding clause, wherein the (network) device is configured to perform one or more, preferably all of the following steps:
   receive information indicative of data injected into the network;
   monitor the network to identify the data injected into the network;
   determine one or more characteristics of the network.
Clause 23: An apparatus comprising:
   one or more processors; and
   a memory storing processor-executable instructions that, when executed by the one or more processors, cause the apparatus to perform the method of any one of the preceding clauses, or any other method described herein.
Clause 24: One or more non-transitory computer-readable media storing processor-executable instructions that, when executed by at least one processor, cause the at least one processor to perform the method of any one of the preceding clauses, or any other method described herein.
Clause 25: A system comprising:
   a computing device configured to send one or more attributes associated with a pulse signal injected into a network, wherein the network comprises a plurality of data streams associated with a plurality of individually encrypted data packets; and
   a network device configured to perform the methods of any one of the preceding clauses, or any other method described herein.

It will be apparent to those skilled in the art that various modifications and variations may be made without departing from the scope. Other configurations will be apparent to those skilled in the art from consideration of the specification and practice described herein. It is intended that the specification and described configurations be considered as exemplary only, with a scope being indicated by the following claims.

## Claims

1. A method comprising:
receiving, by a network device, one or more attributes associated with a pulse signal injected into a network, wherein the network comprises a plurality of data streams comprising a plurality of individually encrypted data packets;
determining the one or more attributes associated with the pulse signal correlates with an effect caused to the network by injecting the pulse signal into the network;
identifying, based on the correlation of the one or more attributes associated with the pulse signal with the effect caused to the network, the pulse signal; and
determining, based on the identification of the pulse signal, one or more characteristics of the network.

2. The method of claim 1, wherein the one or more attributes comprise one or more of a predetermined data size, a predetermined data frequency, a predetermined data pattern, a random data pattern, or a predetermined data injection interval.

3. The method of any one of the preceding claims, wherein the pulse signal comprises null data packets injected into the network according to the one or more attributes.

4. The method of any one of the preceding claims, wherein the plurality of data streams comprises one or more of: the injected data, one or more media streams, one or more video streams, one or more audio streams, or one or more data streams.

5. The method of any one of the preceding claims, wherein the plurality of individual encrypted data packets are encrypted according to a Quick UDP Internet Connection (QUIC) protocol.

6. The method of any one of the preceding claims, wherein the effect caused to the network comprises an increase in a data size of one or more data packets of the plurality of individually encrypted data packets.

7. The method of any one of the preceding claims, wherein determining the one or more attributes associated with the pulse signal correlates with the effect caused to the network by injecting the pulse signal into the network comprises determining a pattern of the plurality of individually encrypted data packets correlates with the one or more attributes associated with the pulse signal.

8. The method of any one of the preceding claims, wherein the one or more characteristics comprise one or more of a network backlog, network congestion, or data packet loss.

9. The method of any one of the preceding claims, further comprising determining the one or more characteristics of the network during one or more time segments.

10. The method of the preceding claim, wherein the one or more time segments comprise one or more of one or more contiguous time segments, one or more continuous time segments, or one or more discrete time segments.

11. The method of any one of the preceding claims, further comprising
removing, based on the identification of the pulse signal, a signature associated with the pulse signal from the network;
determining, based on the removal of the signature associated with the pulse signal from the network, one or more characteristics of at least one data stream of the plurality of data streams.

12. The method of the preceding claim, wherein the one or more characteristics of the at least one data stream comprise one or more of a bit rate or a bandwidth requirement of the at least one data stream.

13. An apparatus comprising:
one or more processors; and
a memory storing processor-executable instructions that, when executed by the one or more processors, cause the apparatus to perform the methods of any one of claims 1-12.

14. One or more non-transitory computer-readable media storing processor-executable instructions that, when executed by at least one processor, cause the at least one processor to perform the methods of any one of claims 1-12.

15. A system comprising:
a computing device configured to send one or more attributes associated with a pulse signal injected into a network, wherein the network comprises a plurality of data streams associated with a plurality of individually encrypted data packets; and
a network device configured to perform the methods of any one of claims 1-12.
